# EUROPEAN PATENT SPECIFICATION

(11) **EP 1 932 590 B1**
(45) Date of publication and mention of the grant of the patent: **27.03.2013**
(21) Application number: 06821818.9
(22) Date of filing: 05.10.2006
(51) Int. Cl.: B01J 23/63, B01D 39/14, B01D 39/20, B01D 53/94, B01J 23/10, B01J 23/66, B01J 32/00, F01N 3/02, F01N 3/022, B01J 23/89, B01J 35/04, B01D 39/12

(54) **PARTICULATE COMBUSTION CATALYST, PARTICULATE FILTER, AND EXHAUST GAS CLEAN-UP SYSTEM**
TEILCHENFÖRMIGER VERBRENNUNGSKATALYSATOR, PARTIKELFILTER UND ABGASREINIGUNGSSYSTEM
CATALYSEUR DE COMBUSTION PARTICULAIRE, FILTRE PARTICULAIRE ET SYSTÈME D'ÉPURATION DE GAZ BRÛLÉS

(30) Priority: 06.10.2005 JP 2005294122
(43) Date of publication of application: 18.06.2008
(73) Proprietor: Mitsui Mining and Smelting Co., Ltd., Shinagawa-ku, Tokyo 141-8584 (JP)
(72) Inventor: ABE, Akira, Ageo-shi, Saitama 362-0021 (JP); ANNO, Yuichi, Ageo-shi, Saitama 362-0021 (JP)
(74) Representative: Dossmann, Gérard
(86) International application number: PCT/JP2006/319983
(87) International publication number: WO 2007/043442

(56) References cited:
- EP-A- 1 600 212
- WO-A-2005/021137
- WO-A1-2006/068022
- DE-A1- 3 737 419
- JP-A- 10 151 348
- JP-A- 10 151 348
- JP-A- 63 116 742
- JP-A- 2001 170 483
- JP-A- 2003 154 223
- JP-A- 2003 275 580
- JP-A- 2003 334 443
- US-A1- 2002 115 563
- US-A1- 2004 176 246
- KUSAKABE K ET AL: "Methane steam reforming over Ce-ZrO2-supported noble metal catalysts at low temperature" FUEL PROCESSING TECHNOLOGY,, vol. 86, no. 3, 15 December 2004 (2004-12-15), pages 319-326, XP004619436 ISSN: 0378-3820

## Description

### Technical Field

The present invention relates to a particulate combustion catalyst, to a particulate filter, and to an exhaust gas cleanup system. More particularly, the present invention relates to a particulate combustion catalyst which realizes removal (through oxidation) of particulate matter discharged from a diesel internal combustion engine; to a particulate filter coated with the particulate combustion catalyst; and to an exhaust gas cleanup system including the particulate filter coated with the particulate combustion catalyst.

### Background Art

Exhaust gas discharged from diesel engines contains nitrogen oxide (NOₓ) and particulate matter, and release of such substances into the atmosphere without any treatment is a main cause of air pollution. Therefore, demand has arisen for strict regulations for such substances. Examples of effective means for removing particulate matter include a diesel exhaust gas trapping system employing a flow-through oxidation catalyst for combustion of soluble organic fractions (SOFs) or a diesel particulate filter (DPF) for trapping soot. For regeneration of the DPF, particulate matter trapped therein must be continuously removed through oxidation.

Hitherto proposed continuous regeneration systems include a system employing a catalyst including a carrier made of an inorganic oxide (e.g., zirconium oxide, vanadium oxide, or cerium oxide), and an expensive noble metal (e.g., Pt) supported on the carrier (see, for example, Patent Document 1, 2, or 3) or a system employing a catalyst including a carrier made of cerium-zirconium mixed oxide and ruthenium supported on the carrier (see patent document 4, 5, 6 or non-patent document 1); and a continuous regeneration method employing NO₂ (see, for example, Patent Document 7). This continuous regeneration method requires provision, upstream of a DPF, of an oxidation catalyst (e.g., Pt) for oxidizing NO into NO₂, and thus involves high cost. In addition, reaction involving NO₂ is affected by the ratio between NOₓ and C, and many restrictions are imposed on the employment of this method.

Patent Document 1: Japanese Patent Application Laid-Open (kokai) No. H10-047035
Patent Document 2: Japanese Patent Application Laid-Open (kokai) No. 2003-334443
Patent Document 3: Japanese Patent Application Laid-Open (kokai) No. 2004-058013
Patent Document 4: WO 2005/021137 A
Patent document 5 : DE 37 37 419 1
Patent document 6 : US 2002/115563 A1
Patent document 7 : Japanese Patent No. 3012249
Non-Patent Document 1 : Kusakabe et al, " Methane steam reforming over Ce-Zr2-supported noble method catalysts at low temperature" >

### Disclosure of the Invention

### Problems to be Solved by the Invention

An object of the present invention is to provide a particulate combustion catalyst which realizes removal of soot through oxidation at low temperature without employment of an expensive noble metal, which enables oxidation reaction to proceed with the aid of only oxygen and thus realizes removal of soot through oxidation at low temperature regardless of the NOₓ concentration of exhaust gas, and which, through addition of a small amount of a noble metal, can enhance effective removal of SOFs through oxidation while ensuring soot combustion. Another object of the present invention is to provide a particulate filter coated with the particulate combustion catalyst. Yet another object of the present invention is to provide an exhaust gas cleanup system comprising the particulate filter coated with the particulate combustion catalyst.

### Means for Solving the Problems

In order to achieve the aforementioned objects, the present inventors have conducted extensive studies, and as a result have found that the objects can be achieved by employing, as a carrier of a particulate combustion catalyst, a cerium-zirconium double oxide having a specific composition, or a cerium-zirconium-based double oxide having a specific composition; employing, as a catalyst component, a first catalyst component consisting of Ag, or an oxide thereof ; and additionally employing a second catalyst component containing at least one metal selected from among Pt, Pd, and Rh, or an oxide of any of these metals. The present invention has been accomplished on the basis of this finding.

Accordingly, the present invention provides a particulate combustion catalyst characterized by comprising a carrier containing a cerium-zirconium double oxide having a cerium oxide content of 5 to 50 mass%; and a first catalyst component supported on the carrier, and consisting of Ag, or an oxide thereof, with second catalyst component containing at least one metal selected from among Pt, and Pd, and Rh, or an oxide of any of these metals.

The present invention also provides a particulate combustion catalyst characterized by comprising a carrier containing a cerium-zirconium-based double oxide containing an oxide of at least one metal selected from among Nd, La, Y, Pr, Ba, Ca, Mg, Sn, and Sr in an amount of 1 to 35 mass%, and having a cerium oxide content of 5 to 50 mass%; and a first catalyst component supported on the carrier, and consisting of Ag, or an oxide thereof, with second catalyst component containing at least one metal selected from among Pt and Pd and Rh, or an oxide of any of these metals.

In any of the aforementioned particulate combustion catalysts of the present invention, a second catalyst component containing at least one metal selected from among Pt, Pd, and Rh, or an oxide of any of these metals is additionally supported on the carrier in an amount as reduced to metal of 0.01 to 2 mass% on the basis of the mass of the carrier.

The present invention also provides a particulate filter characterized by being coated with any of the aforementioned particulate combustion catalysts. The present invention also provides an exhaust gas cleanup system characterized by comprising a particulate filter coated with any of the aforementioned particulate combustion catalysts.

### Effects of the Invention

Employment of the particulate combustion catalyst of the present invention realizes removal of soot through oxidation at low temperature without employment of an expensive noble metal. When the combustion catalyst is employed, since oxidation reaction proceeds with the aid of only oxygen, soot can be removed through oxidation at low temperature regardless of the NOₓ concentration of exhaust gas. Even when a catalyst system employing the catalyst is exposed to a high-temperature atmosphere for a long period of time, degradation of the system can be suppressed. Addition of a small amount of a noble metal can enhance effective removal of SOFs through oxidation while ensuring soot combustion.

### Best Modes for Carrying Out the Invention

In the present invention, a cerium-zirconium double oxide having a specific composition is employed as a carrier of the particulate combustion catalyst. The cerium oxide content of the double oxide must be 5 to 50 mass%. When the cerium oxide content exceeds 50 mass%, the specific surface area of the carrier is considerably reduced at a high temperature (e.g., 700°C or higher), which eventually results in thermal degradation of the catalyst. In addition, when the cerium oxide content exceeds 50 mass%, an active species fails to sufficiently exert its performance. In contrast, when the cerium oxide content is less than 5 mass%, the carrier exhibits poor heat resistance, which may eventually result in thermal degradation of the catalyst.

In the present invention, preferably, the carrier is made of a cerium-zirconium-based double oxide containing an oxide of at least one metal selected from among Nd, La, Y, Pr, Ba, Ca, Mg, Sn, and Sr. When the carrier is made of a cerium-zirconium-based double oxide containing an oxide of such a metal, the carrier exhibits improved thermal stability, and oxidation property at low temperature is improved. In order to attain such effects, the amount of an oxide of at least one metal selected from among Nd, La, Y, Pr, Ba, Ca, Mg, Sn, and Sr must be 1 mass% or more. However, when the amount of such a metal oxide exceeds 35 mass%, accordingly, the relative amounts of cerium oxide and zirconium oxide are reduced, and characteristics of a carrier made of a cerium-zirconium double oxide tend to be deteriorated. Therefore, in the cerium-zirconium-based double oxide contained in the carrier employed, preferably, the amount of an oxide of at least one metal selected from among Nd, La, Y, Pr, Ba, Ca, Mg, Sn, and Sr is 1 to 35 mass% (i.e., when two or more metal oxides are employed, the total amount of the oxides is 1 to 35.mass%), and the cerium oxide content is 5 to 50 mass%.

In the present invention, Ag or an oxide thereof must be supported, as a first catalyst component, on the carrier. A conventionally known technique (e.g., the impregnation method or the sol-gel method) may be employed for providing the first catalyst component on the carrier. Ag, which is employed in the present invention, is less expensive than, for example, Pt or Pd. In addition, when an Ag component is employed in combination with a specific carrier used in the present invention, further excellent effects are obtained, as compared with the case where a Pt or Pd component is employed. In the present invention, preferably, the amount (as reduced to metal) of the first catalyst component; i.e., Ag, or an oxide thereof. , is 0.5 to 30 mass% on the basis of the mass of the carrier (i.e., 0.5 to 30 parts by mass on the basis of 100 parts by mass of the carrier). When the amount of the first catalyst component is less than 0.5 mass%, the catalyst component fails to sufficiently exhibit its catalytic effects, whereas when the amount of the first catalyst component exceeds 30 mass%, the catalyst component-carrier combination employed in the present invention (i.e., the combination of a specific catalyst component and a specific carrier) fails to sufficiently exhibit a synergistic effect. Meanwhile, when the amount of the catalyst component is large, sintering of metal is likely to occur, and the catalyst component is not expected to exhibit its catalytic effects.

In the present invention, a second catalyst component; i.e., at least one metal selected from among Pt, Pd, and Rh, or an oxide of any of these metals, is additionally supported on the carrier in an amount (as reduced to metal) of 0.01 to 2 mass% on the basis of the mass of the carrier, so as to enhance removal of SOFs contained in particulate matter through oxidation. When the amount of the second catalyst component exceeds 2 mass%, the resultant catalyst becomes expensive, since Pt, Pd, or Rh is an expensive metal. In addition, Ag fails to sufficiently exhibit its catalytic effects. In contrast, when the amount of the second catalyst component is less than 0.01 mass%, the catalyst component fails to sufficiently exhibit its catalytic effects.

In consideration that the particulate filter of the present invention is produced by causing the particulate combustion catalyst of the present invention to be held on a base, preferably, the surface of the carrier is provided with a binder component such as SiO₂, TiO₂, ZrO₂, or Al₂O₃. When such a binder component is provided on the surface of the carrier, adhesion between the base and the carrier is enhanced, and the catalyst exhibits improved durability and heat resistance.

The particulate filter of the present invention may assume any known form of particulate filter, but preferably has a three-dimensional structure. Specific examples of filters having a three-dimensional structure include a wall-through filter, a flow-through honeycomb filter, a wire mesh filter, a ceramic fiber filter, a metallic porous filter, a particle-charged filter, and a foam filter. Examples of the material of the base include ceramic materials such as cordierite and SiC; Fe-Cr-Al alloys; and stainless steel alloys.
The exhaust gas cleanup system of the present invention, into which the aforementioned particulate filter of the present invention has been incorporated, will be readily appreciated by those skilled in the art.

Next will be described a method for producing the particulate filter of the present invention.
A cerium-zirconium double oxide serving as a carrier is mixed with a binder component (e.g., SiO₂ or alumina sol) and water, and the resultant mixture is finely milled by means of a milling apparatus (e.g., a ball mill). A base filter (e.g., a wire mesh filter) is coated with the thus-obtained slurry. In general, the slurry-coated filter is fired at a temperature of about 500°C to about 700°C. The thus-formed wash-coating layer is impregnated with a catalyst component (e.g., a nitrate of ruthenium or silver), followed by drying and firing. The total catalyst coating amount is preferably 10 to 100 g/L (for a wall-flow DPF) or about 50 to about 150 g/L (for a wire mesh DPF). When the total catalyst coating amount is excessively small, sufficient performance fails to be attained, whereas when the total catalyst coating amount is excessively large, back pressure to exhaust gas increases. Examples

The present invention will next be described in detail with reference to Examples and Comparative Examples. In each of the Examples and Comparative Examples, a parenthesized numerical value following each of the oxides constituting a double oxide represents the amount (mass%) of the constitutive oxide.

### Comparative Example 1

Water (30 g) was added to a nitric acid solution (concentration: 4 mass%) (1.25 g) of ruthenium nitrate, and powder (5.0 g) of a double oxide of CeO₂(21) + ZrO₂(72) + La₂O₃(2) + Nd₂O₃ (5) was added thereto, followed by stirring for 30 minutes. The thus-obtained slurry was dried at 120°C for three hours, and then finally fired in air at 500°C for one hour. The resultant particulate combustion catalyst was found to have an Ru content of 1 mass% on the basis of the mass of the carrier.

### Example 1 (not according to the invention)

Water (30 g) was added to silver nitrate (0.080 g), followed by stirring, to thereby prepare an aqueous silver nitrate solution. Powder (5.0 g) of a double oxide of CeO₂(21) + ZrO₂(72) + La₂O₃(2) + Nd₂O₃(5) was added to the aqueous solution, followed by stirring for 30 minutes. The thus-obtained slurry was dried at 120°C for three hours, and then finally fired in air at 500°C for one hour. The resultant particulate combustion catalyst was found to have an Ag content of 1 mass% on the basis of the mass of the carrier.

### Example 2 (not according to the invention)

Water (30 g) was added to silver nitrate (0.417 g), followed by stirring, to thereby prepare an aqueous silver nitrate solution. Powder (5.0 g) of a double oxide of CeO₂(30) + ZrO₂(70) was added to the aqueous solution, followed by stirring for 30 minutes. The thus-obtained slurry was dried at 120°C for three hours, and then finally fired in air at 500°C for one hour. The resultant particulate combustion catalyst was found to have an Ag content of 5 mass% on the basis of the mass of the carrier.

### Example 3 (not according to the invention)

The procedure of Example 2 was repeated, except that the double oxide of CeO₂(30) + ZrO₂(70) was replaced by a double oxide of CeO₂(30) + ZrO₂(62) + SnO₂(8), to thereby prepare a particulate combustion catalyst. The particulate combustion catalyst was found to have an Ag content of 5 mass% on the basis of the mass of the carrier.

### Example 4 (not according to the invention)

The procedure of Example 2 was repeated, except that the double oxide of CeO₂(30) + ZrO₂(70) was replaced by a double oxide of CeO₂(30) + ZrO₂(65) + BaO(5), to thereby prepare a particulate combustion catalyst. The particulate combustion catalyst was found to have an Ag content of 5 mass% on the basis of the mass of the carrier.

### Example 5 (not according to the invention)

The procedure of Example 2 was repeated, except that the double oxide of CeO₂(30) + ZrO₂(70) was replaced by a double oxide of CeO₂(33) + ZrO₂(65) + SrO(2), to thereby prepare a particulate combustion catalyst. The particulate combustion catalyst was found to have an Ag content of 5 mass% on the basis of the mass of the carrier.

### Example 6 (not according to the invention)

The procedure of Example 2 was repeated, except that the double oxide of CeO₂(30) + ZrO₂(70) was replaced by a double oxide of CeO₂(47) + ZrO₂(47) + La₂O₃(2) + Nd₂O₃(4), to thereby prepare a particulate combustion catalyst. The particulate combustion catalyst was found to have an Ag content of 5 mass% on the basis of the mass of the carrier.

### Comparative Example 2

Water (30 g) was added to a nitric acid solution (concentration: 4 mass%) (6.63 g) of ruthenium nitrate, and powder (5.0 g) of a double oxide of CeO₂(47) + ZrO₂(47) + La₂O₃(2) + Nd₂O₃(4) was added thereto, followed by stirring for 30 minutes. The thus-obtained slurry was dried at 120°C for three hours, and then finally fired in air at 500°C for one hour. The resultant particulate combustion catalyst was found to have an Ru content of 5 mass% on the basis of the mass of the carrier.

### Example 7 (not according to the invention)

The procedure of Example 2 was repeated, except that the double oxide of CeO₂(30) + ZrO₂(70) was replaced by a double oxide of CeO₂(20) + ZrO₂(72) + Y₂O₃(2) + Pr₆O₁₁(6) , to thereby prepare a particulate combustion catalyst. The particulate combustion catalyst was found to have an Ag content of 5 mass% on the basis of the mass of the carrier.

### Example 8 (not according to the invention)

The procedure of Example 2 was repeated, except that the double oxide of CeO₂(30) + ZrO₂(70) was replaced by a double oxide of CeO₂(8) + ZrO₂(62) + La₂O₃(2) + Nd₂O₃(28), to thereby prepare a particulate combustion catalyst. The particulate combustion catalyst was found to have an Ag content of 5 mass% on the basis of the mass of the carrier.

### Example 9 (not according to the invention)

The procedure of Example 2 was repeated, except that the double oxide of CeO₂(30) + ZrO₂(70) was replaced by a double oxide of CeO₂(21) + ZrO₂(72) + La₂O₃(2) + Fe₂O₃(5) , to thereby prepare a particulate combustion catalyst. The particulate combustion catalyst was found to have an Ag content of 5 mass% on the basis of the mass of the carrier.

### Comparative Example 3

The procedure of Comparative Example 1 was repeated, except that the nitric acid solution of dinitrodiammine Pt was replaced by silver nitrate, to thereby prepare a particulate combustion catalyst having an Ag content of 1 mass% on the basis of the mass of the carrier.

### Comparative Example 4

The procedure of Comparative Example 1 was repeated, except that the nitric acid solution of ruthenium nitrate was replaced by silver nitrate, and the double oxide was replaced by a double oxide of CeO₂(58) + ZrO₂(42), to thereby prepare a particulate combustion catalyst having an Ag content of 5 mass% on the basis of the mass of the carrier.

### Comparative Example 5

The procedure of Comparative Example 4 was repeated, except that the double oxide of CeO₂(58) + ZrO₂(42) was replaced by a double oxide of CeO₂(75) + ZrO₂(18) + La₂O₃(2) + Nd₂O₃(5), to thereby prepare a particulate combustion catalyst having an Ag content of 5 mass% on the basis of the mass of the carrier.

### Comparative Example 6

The procedure of Comparative Example 1 was repeated, except that the nitric acid solution of ruthenium nitrate was replaced by a nitric acid solution of dinitrodiammine Pt, to thereby prepare a particulate combustion catalyst having a Pt content of 1 mass% on the basis of the mass of the carrier.

### Evaluation of powdery catalyst by use of simulated exhaust gas

Combustion initiation temperature corresponding to each of the powdery particulate combustion catalysts prepared in Examples 1 to 9 and Comparative Examples 1 to 6 was measured through the following method.

Each of the powdery particulate combustion catalysts prepared in Examples 1 to 9 and Comparative Examples 1 to 6 (50 mg) and carbon (Printex-V (toner carbon), product of Degussa) (5 mg) were mixed together by means of an agate mortar for 15 seconds, and the resultant mixture was fixed with quartz wool at a center portion of a quartz reaction tube. While a circulation gas having the below-described composition was caused to flow through the quartz reaction tube at the below-described flow rate, the temperature of the reaction tube was elevated at the below-described temperature elevation rate by means of an electric furnace, and CO and CO₂ concentrations were measured at the outlet of the reaction tube by means of an infrared analyzer. The temperature at the inlet of the catalyst-containing reaction tube was measured when CO₂ concentration reached 100 ppm (i.e., electric furnace control temperature). This temperature was employed as combustion initiation temperature.
Gas composition: O₂: 10%, H₂O: 10%, N₂: balance
Flow rate: 4,000 cc/min
Temperature elevation rate: 10 degrees (°C)/min

Table 1 shows the thus-measured combustion initiation temperatures corresponding to the respective powdery particulate combustion catalysts prepared in Examples 1 to 9 and Comparative Examples 1 to 6, catalytically active species of the catalysts; amounts of the catalytically active species (mass% on the basis of the entire carrier mass); and carrier compositions.

[Table 1]

**Table 1**

| | Catalytically active species | Supported catalyst amount mass% | Carrier composition (mass%) | Combustion initiation temp. (°C) |
|---|---|---|---|---|
| Comp. Ex. 1 | Ru | 1 | CeO₂(21)+ZrO₂(72)+La₂O₃(2)+Nd₂O₃(5) | 281 |
| Ex. 1 | Ag | 1 | CeO₂(21)+ZrO₂(72)+La₂O₃(2)+Nd₂O₃(5) | 261 |
| Ex. 2 | Ag | 5 | CeO₂(30)+ZrO₂(70) | 237 |
| Ex. 3 | Ag | 5 | CeO₂(30)+ZrO₂(62)+SnO₂(8) | 246 |
| Ex. 4 | Ag | 5 | CeO₂(30)+ZrO₂(65)+BaO(5) | 257 |
| Ex. 5 | Ag | 5 | CeO₂(33)+ZrO₂(65)+SrO(2) | 260 |
| Ex. 6 | Ag | 5 | CeO₂(47)+ZrO₂(47)+La₂O₃(2)+Nd₂O₃(4) | 232 |
| Comp. Ex. 2 | Ru | 5 | CeO₂(47)+ZrO₂(47)+La₂O₃(2)+Nd₂O₃(4) | 263 |
| Ex. 7 | Ag | 5 | CeO₂(20)+ZrO₂(72)+Y₂O₃(2)+Pr₆O₁₁(6) | 231 |
| Ex. 8 | Ag | 5 | CeO₂(8)+ZrO₂(62)+La₂O₃(2)+Nd₂O₃(28) | 256 |
| Ex. 9 | Aq | 5 | CeO₂(21)+ZrO₂(72)+La₂O₃(2)+Fe₂O₃(5) | 243 |
| Comp. Ex. 3 | Ag | 1 | ZrO₂ | 403 |
| Comp. Ex. 4 | Ag | 5 | CeO₂(58)+ZrO₂(42) | 356 |
| Comp. Ex. 5 | Ag | 5 | CeO₂(75)+ZrO₂(18)+La₂O₃(2)+Nd₂O₃(5) | 340 |
| Comp. Ex. 6 | Pt | 1 | CeO₂(21)+ZrO₂(72)+La₂O₃(2)+Nd₂O₃(5) | 351 |

### Example 10 (not according to the invention)

Water (30 g) was added to a double oxide (20 g) of CeO₂(47) + ZrO₂(47) + La₂O₃(2) + Nd₂O₃(4), and SiO₂ sol (i.e., a binder component) (5 g as reduced to SiO₂) was added thereto, followed by mixing for two hours, to thereby prepare a wash-coat slurry. A wire mesh filter (20 mm in diameter x 20 mm in length, wire diameter: 0.25 mm) was coated with the slurry, followed by drying at 120°C for three hours, and then firing in air at 500°C for one hour. Thus, a double oxide carrier layer containing the binder component was formed on the filter so that the amount of the carrier was 100 g on the basis of 1 L of filter volume. The double-oxide-coated filter was impregnated with an aqueous silver nitrate solution having a predetermined concentration. The resultant product was dried at 120°C for three hours, and then finally fired in air at 500°C for one hour. The thus-obtained particulate filter was found to have an Ag content of 5 g on the basis of 1 L of the filter, or 5 mass% on the basis of the mass of the carrier.

### Evaluation of catalyst-coated particulate filter by use of simulated exhaust gas

Combustion initiation temperature corresponding to the catalyst-coated particulate filter obtained in Example 10 was measured through the following method.

A predetermined amount of a dispersion prepared by dispersing carbon (Printex-V (toner carbon), product of Degussa) (20 mg) in ethyl alcohol was added dropwise to the catalyst-coated particulate filter obtained in Example 10 (20 mm in diameter x 20 mm in length) from above the filter, followed by drying at 100°C for 10 minutes. Thus, carbon (20 mg) was deposited on one catalyst-coated particulate filter. The carbon-deposited filter was fixed at a center portion of a quartz reaction tube. While a circulation gas having the below-described composition was caused to flow through the quartz reaction tube at the below-described flow rate, the temperature of the reaction tube was elevated at the below-described temperature elevation rate by means of an electric furnace, and CO and CO₂ concentrations were measured at the outlet of the reaction tube by means of an infrared analyzer. The temperature at the inlet of the catalyst-containing reaction tube was measured when CO₂ concentration reached 400 ppm (i.e., electric furnace control temperature). This temperature was employed as combustion initiation temperature. The combustion initiation temperature was found to be 396°C.
Gas composition: O₂: 10%, H₂O: 10%, N₂: balance
Flow rate: 4,000 cc/min
Temperature elevation rate: 10 degrees (°C)/min

### Example 11 (not according to the invention)

Water (30 g) was added to a double oxide (20 g) of CeO₂(30) + ZrO₂(70), and acetic acid-ZrO₂ sol serving as a binder component (5 g as reduced to ZrO₂) was added thereto, followed by mixing for two hours, to thereby prepare a wash-coat slurry. A cordierite wall-flow particulate filter (DPF) (25.4 mm in diameter x 60 mm in length) was coated with the oxide by use of the slurry. The resultant product was dried at 120°C for three hours, and then finally fired in air at 500°C for one hour. Thus, a double oxide carrier layer containing the binder component was formed on the filter so that the amount of the carrier was 50 g on the basis of 1 L of filter volume. The double-oxide-coated filter was impregnated with an aqueous silver nitrate solution having a predetermined concentration. The resultant product was dried at 120°C for three hours, and then finally fired in air at 500°C for one hour. The finally formed catalyst was found to have an Ag content of 5 mass% on the basis of the mass of the carrier.

### Example 12

The procedure of Example 11 was repeated, except that a mixture of an aqueous silver nitrate solution having a predetermined concentration and a nitric acid solution of dinitrodiammine Pt having a predetermined concentration was employed, to thereby coat a double-oxide-coated cordierite DPF with a catalyst component. The finally formed catalyst was found to have an Ag content of 5 mass% and a Pt content of 0.1 mass%, on the basis of the mass of the carrier.

### Example 13

The procedure of Example 11 was repeated, except that a mixture of an aqueous silver nitrate solution having a predetermined concentration and an aqueous palladium nitrate solution having a predetermined concentration was employed, to thereby coat a double-oxide-coated cordierite DPF with a catalyst component. The finally formed catalyst was found to have an Ag content of 5 mass% and a Pd content of 1 mass%, on the basis of the mass of the carrier.

### Example 14

The procedure of Example 13 was repeated, except that CeO₂(20) + ZrO₂(70) + CaO(10) was employed as a double oxide, to thereby coat a double-oxide-coated cordierite DPF with a catalyst component. The finally formed catalyst was found to have an Ag content of 5 mass% and a Pd content of 0.1 mass%, on the basis of the mass of the carrier.

### Example 15

The procedure of Example 13 was repeated, except that CeO₂(20) + ZrO₂(70) + MgO(10) was employed as a double oxide, to thereby coat a double-oxide-coated cordierite DPF with a catalyst component. The finally formed catalyst was found to have an Ag content of 5 mass% and a Pd content of 0.1 mass%, on the basis of the mass of the carrier.

### Evaluation of catalyst-coated DPF in terms of soot combustion by use of simulated exhaust gas

Soot combustion initiation temperature corresponding to each of the catalyst-coated DPFs obtained in Examples 11 to 15 was measured through the following method.

A predetermined amount of a dispersion prepared by dispersing carbon (Printex-V (toner carbon), product of Degussa) in ethyl alcohol was added dropwise to each of the catalyst-coated DPFs (25.4 mm in diameter x 60 mm in length) obtained in Examples 11 to 15 from above the DPF, followed by drying at 100°C for 30 minutes. Thus, carbon (150 mg) was deposited on one catalyst-coated DPF. The carbon-deposited DPF was fixed at a center portion of a simulated exhaust gas reaction tube (quartz reaction tube). While a circulation gas having the below-described composition was caused to flow through the quartz reaction tube at the below-described flow rate, the temperature of the reaction tube was elevated to 600°C at the below-described temperature elevation rate by means of an electric furnace, and CO and CO₂ concentrations were measured at the outlet of the reaction tube by means of an infrared analyzer. The temperature at the inlet of the catalyst-containing reaction tube was measured when CO₂ concentration reached 30 ppm (i.e., electric furnace control temperature). This temperature was employed as combustion initiation temperature.
Gas composition: NO: 200 ppm, O₂: 10%, H₂O: 10%, N₂: balance
Flow rate: 25 L/min
Temperature elevation rate: 20 degrees (°C)/min

Evaluation of catalyst-coated DPF in terms of combustion cleaning of light oil by use of simulated exhaust gas
Light oil cleanup temperature corresponding to each of the catalyst-coated DPFs obtained in Examples 11 to 15 was measured through the below-described method, for evaluation of light oil cleanup property (temperature at which percent cleanup reaches 50%).

Each of the catalyst-coated particulate filters obtained in Examples 11 to 15 was fixed at a center portion of a simulated exhaust gas reaction tube (quartz reaction tube). While a circulation gas having the below-described composition was caused to flow through the quartz reaction tube at the below-described flow rate, the temperature of the reaction tube was elevated to 450°C at the below-described temperature elevation rate by means of an electric furnace, and THC (total hydrocarbon content) was determined by means of an analyzer. In the determination, hydrocarbon concentration was measured at the outlet of the reaction tube by means of a hydrogen flame detector. The thus-obtained temperature values at which percent THC cleanup reached 50% (i.e., T50) were compared with one another.
Gas composition: NO: 200 ppm, O₂: 10%, CO: 300 ppm, hydrogen: 100 ppm, H₂O: 10%, N₂: balance
Light oil: mass ratio, 2.5 times the mass of NOₓ
Flow rate: 25 L/min
Temperature elevation rate: 20 degrees (°C)/min

Table 2 shows the thus-measured combustion initiation temperatures corresponding to the respective catalyst-coated particulate filters obtained in Examples 11 to 15; hydrocarbon 50% cleanup temperatures corresponding to the filters; catalytically active species of the catalysts; amounts of the catalytically active species (mass% on the basis of the entire carrier mass); and carrier compositions.

[Table 2]

**Table 2**

| | Catalytically active species | Supported catalyst amount mass% | Carrier composition (mass%) | Combustion initiation temp. (°C) | HC-T50 temp. (°C) |
|---|---|---|---|---|---|
| Ex. 11 | Ag | 5 | CeO₂(30)+ZrO₂(70) | 387 | 343 |
| Ex 12 | Ag/Pt | 5/0.1 | CeO₂(30)+ZrO₂(70) | 383 | 302 |
| Ex. 13 | Ag/Pd | 5/1 | CeO₂(30)+ZrO₂(70) | 388 | 248 |
| Ex. 14 | Ag/Pd | 5/0.1 | CeO₂(20)+ZrO₂(70)+CaO(10) | 383 | 318 |
| Ex. 15 | Ag/Pd | 5/0.1 | CeO₂(20)+ZrO₂(70)+MgO(10) | 385 | 322 |

## Claims

1. A particulate combustion catalyst **characterized by** comprising a carrier containing a cerium-zirconium double oxide having a cerium oxide content of 5 to 50 mass%, and a first catalyst component supported on the carrier, and consisting of Ag, or an oxide thereof, with second catalyst component containing at least one metal selected from among Pt, and Pd, and Rh, or an oxide of any of these metals.

2. A particulate combustion catalyst **characterized by** comprising a carrier containing a cerium-zirconium-based double oxide containing an oxide of at least one metal selected from among Nd, La, Y, Pr, Ba, Ca, Mg, Sn, and Sr in an amount of 1 to 35 mass%, and having a cerium oxide content of 5 to 50 mass%; and a first catalyst component supported on the carrier, and consisting of Ag, or an oxide thereof, with second catalyst component containing at least one metal selected from among Pt, Pd, and Rh, or an oxide of any of these metals.

3. A particulate combustion catalyst as described in claim 1 or 2, wherein the amount, as reduced to metal, of the first catalyst component containing Ag, or an oxide thereof is 0.5 to 30 mass% on the basis of the mass of the carrier.

4. A particulate combustion catalyst as described in any one of claims 1 to 3, wherein the second catalyst component containing at least one metal selected from among Pt, Pd, and Rh, or an oxide of any of these metals is supported on the carrier in an amount as reduced to metal of 0.01 to 2 mass% on the basis of the mass of the carrier.

5. A particulate combustion catalyst as described in any one of claims 1 to 4, wherein the surface of the carrier is provided with SiO₂, TiO₂, ZrO₂, or Al₂O₃ serving as a binder component.

6. A particulate filter **characterized by** being coated with a particulate combustion catalyst as recited in any one of claims 1 to 5.

7. An exhaust gas cleanup system **characterized by** comprising a particulate filter coated with a particulate combustion catalyst as recited in any one of claims 1 to 5.

## Patentansprüche

1. Partikulärer Verbrennungskatalysator, der **dadurch gekennzeichnet ist, dass** er einen Träger umfasst, der ein Cer-Zirconium-Doppeloxid mit einem Ceroxidgehalt von 5 bis 50 Massen-% sowie eine auf dem Träger geträgerte erste Katalysatorkomponente enthält, und dass er aus Ag oder einem Oxid davon besteht, wobei die zweite Katalysatorkomponente mindestens ein aus Pt und Pd und Rh oder einem Oxid eines dieser Metalle ausgewähltes Metall enthält.

2. Partikulärer Verbrennungskatalysator, der **dadurch gekennzeichnet ist, dass** er einen Träger umfasst, der ein cer-zirconium-basiertes Doppeloxid enthält, das ein Oxid von mindestens einem aus Nd, La, Y, Pr, Ba, Ca, Mg, Sn und Sr ausgewählten Metall in einer Menge von 1 bis 35 Massen-% enthält und einen Ceroxid Gehalt von 5 bis 50 Massen-% aufweist; und eine auf dem Träger geträgerte erste Katalysatorkomponente enthält und aus Ag oder einem Oxid davon besteht, wobei die zweite Katalysatorkomponente mindestens ein aus Pt, Pd und Rh oder einem Oxid eines dieser Metalle ausgewähltes Metall enthält.

3. Partikulärer Verbrennungskatalysator nach Anspruch 1 oder 2, wobei die auf Metall reduzierte Menge der ersten Katalysatorkomponente, die Ag oder ein Oxid davon enthält, 0,5 bis 30 Massen-% beträgt, bezogen auf die Masse des Trägers.

4. Partikulärer Verbrennungskatalysator nach einem der Ansprüche 1 bis 3, wobei die zweite Katalysatorkomponente, die mindestens ein aus Pt, Pd und Rh oder einem Oxid eines dieser Metalle ausgewähltes Metall enthält, in einer auf Metall reduzierten Menge von 0,01 bis 2 Massen-% bezogen auf die Masse des Trägers auf dem Träger geträgert ist.

5. Partikulärer Verbrennungskatalysator nach einem der Ansprüche 1 bis 4, wobei die Oberfläche des Trägers mit als Binderkomponente dienendem SiO₂, TiO₂, ZrO₂ oder Al₂O₃ versehen ist.

6. Partikelfilter, der **dadurch gekennzeichnet ist, dass** er mit einem partikulären Verbrennungskatalysator nach einem der Ansprüche 1 bis 5 beschichtet ist.

7. Abgasreinigungssystem, das **dadurch gekennzeichnet ist, dass** es einen mit einem partikulären Verbrennungskatalysator nach einem der Ansprüche 1 bis 5 beschichteten Partikelfilter umfasst.

## Revendications

1. Catalyseur de combustion de particules, **caractérisé en ce qu'**il comprend un support contenant un double oxyde de cérium-zirconium ayant une teneur en oxyde de cérium allant de 5 à 50 % en masse, et un premier composant catalytique porté sur le support et constitué de Ag ou d'un oxyde de celui-ci, un deuxième composant catalytique contenant au moins un métal sélectionné parmi Pt et Pd et Rh ou un oxyde de l'un quelconque des ces métaux.

2. Catalyseur de combustion de particules, **caractérisé en ce qu'**il comprend un support contenant un double oxyde à base de cérium-zirconium contenant un oxyde d'au moins un métal sélectionné parmi Nd, La, Y, Pr, Ba, Ca, Mg, Sn et Sr, en une quantité allant de 1 à 35 % en masse; et ayant une teneur en oxyde de cérium allant de 5 à 50 % en masse; et un premier composant catalytique porté sur le support et constitué de Ag ou d'un oxyde de celui-ci, un deuxième composant catalytique contenant au moins un métal sélectionné parmi Pt, Pd et Rh ou un oxyde de l'un quelconque des ces métaux.

3. Catalyseur de combustion de particules selon la revendication 1 ou 2, dans lequel la quantité, réduite au métal, du premier composant catalytique contenant Ag ou un oxyde de celui-ci est comprise entre 0,5 et 30 % en masse sur la base de la masse du support.

4. Catalyseur de combustion de particules selon l'une quelconque des revendications 1 à 3, dans lequel le deuxième composant catalytique contenant au moins un métal sélectionné parmi Pt, Pd et Rh ou un oxyde de l'un quelconque de ces métaux est porté sur le support en une quantité, réduite au métal, allant de 0,01 à 2 % en masse sur la base de la masse du support.

5. Catalyseur de combustion de particules selon l'une quelconque des revendications 1 à 4, dans lequel la surface du support est pourvue de SiO₂, TiO₂, ZrO₂ ou Al₂O₃ servant de composant liant.

6. Filtre à particules, **caractérisé en ce qu'**il est revêtu d'un catalyseur de combustion de particules tel que défini dans l'une quelconque des revendications 1 à 5.

7. Système d'épuration de gaz d'échappement, **caractérisé en ce qu'**il comprend un filtre à particules revêtu d'un catalyseur de combustion de particules tel que défini dans l'une quelconque des revendications 1 à 5.
